(19) Europäisches Patentamt
European Patent Office
Office européen des brevets

(11) **EP 4 607 472 A1**

(12) **EUROPEAN PATENT APPLICATION**

(43) Date of publication:
**27.08.2025   Bulletin 2025/35**

(21) Application number: **24382198.0**

(22) Date of filing: **23.02.2024**

(51) International Patent Classification (IPC):
**G06V 10/46** (2022.01)          **G06V 20/58** (2022.01)

(52) Cooperative Patent Classification (CPC):
**G06V 20/586; G06V 10/46;** B62D 15/0285;
G06V 10/82

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Ficosa Automotive, S.L.U.**
**08028 Barcelona (ES)**

(72) Inventors:
• **JEVTIC, Aleksandar**
**Viladecavalls (ES)**

• **PÉREZ-BENITO, Cristina**
**Viladecavalls (ES)**
• **SINTES, Joan**
**Joan Sintes (ES)**
• **NARANJO, Rubén**
**Donostia-San Sebastián (ES)**
• **ALONSO, Pablo**
**Donostia-San Sebastián (ES)**
• **DELGADO, Guillem**
**Donostia-San Sebastián (ES)**
• **GARCÍA, Mikel**
**Donostia-San Sebastián (ES)**

(74) Representative: **Bardehle Pagenberg S.L.**
**Avenida Diagonal 598, 3o, 1a**
**08021 Barcelona (ES)**

(54) **PARKING ASSISTANCE SYSTEM AND METHOD FOR OPERATING A PARKING ASSISTANCE SYSTEM**

(57)    The present disclosure relates to a parking assistance system (5) for a vehicle (10). The parking assistance system (5) comprises an image acquisition device (20) configured to acquire image data (21) and a parking slot detection module (31) configured to process the acquired image data (21) to extract one or more 2D bounding shapes (25) to demarcate corresponding parking slots (11) in the image data (21). The 2D bounding shapes (25) are formed by a finite number of segments intersecting at corresponding vertices to enclose a close region. At least one vertex angle is greater than 90°. The present disclosure further relates to methods for operating a parking assistance system (5).

Fig. 4A

**Description**

TECHNICAL FIELD

The present disclosure relates to parking assistance systems for vehicles and, more particularly, to parking assistance systems comprising image acquisition devices. The present disclosure also relates to methods for operating parking assistance systems.

BACKGROUND

Advanced Driver Assistance Systems (ADAS) play a pivotal role in enhancing road safety and improving the overall driving experience. Furthermore, apart from assisting and enhancing driving experience for drivers, autonomous vehicles may also incorporate such systems. In particular, parking assistance systems have gained significant attention due to their potential to redefine the parking experience and due to their role as an enabling technology for autonomous vehicles.

Parking assistance systems involve incorporating parking slot detection in the system. Parking slot detection is particularly challenging. Among other aspects, parking detection is complicated due to the large variability in parking slot types and due to the impact of environmental aspects such as the presence of obstacles, illumination or weather conditions. Moreover, parking assistance systems should be capable of processing complex data in real-time to provide timely feedback to the driver or to enable efficient operation of autonomous vehicles.

Different technologies have been proposed concerning detection of parking slots around a vehicle. Those can be broadly categorized into two groups: non-visual detection and visual detection.

Non-visual detection methods rely primarily on ultrasonic sensors, short-range radar, SODAR or LIDAR systems. Most of these methods are based on an emission of microwave signals to gauge the distance between the sensor, which is commonly installed in the vehicle, and its surroundings. To this end, "time of flight" (TOF) is used. These methods provide robustness against changes in nearby illumination conditions and benefit from straightforward data processing. As such, non-visual methods are, under some scenarios, sufficient to properly detect parking slots. Nevertheless, the use of said systems has some drawbacks. In particular, most of these methods are based on recognizing free spaces between vehicles that are already parked and/or between certain existing obstacles. This information is then used to detect vacant parking slots. Consequently, the usability of non-visual systems is limited as they cannot be employed in open environments. Moreover, ultrasonic radars and short-range radars are characterized by their small coverage, due to their directionality. These systems exhibit a lack of resolution which results in a limited perception of parking slots characteristics. Alternative non-visual systems, such as those based on laser systems, e.g. LIDAR, produce more stable and high-precision results. Nevertheless, this comes typically at the expense of significantly elevated costs, which increase the overall cost of the vehicle thus limiting scalability of such laser-based approaches.

Visual methods typically rely on cameras for image acquisition of the surrounding of the vehicle. Monocular RGB cameras or RGB-Depth (RGB-D) cameras are predominantly employed. As opposed to non-visual methods, visual methods can identify and operate properly regardless of the presence of other vehicles. Besides, they can also effectively determine the occupancy of a detected parking slot. Computer vision techniques are used to try and identify parking slots. Said computer vision techniques typically comprise algorithms to detect certain low-level features such as parking lines, parking corners, or other parking markers. Said features are used for an initial detection and parking slots are extracted from that low-level information. The use of such traditional algorithms exhibits some limitations, especially when the parking markers are not clearly visible, either due to insufficient illumination and/or to poor marking of the parking slots due to e.g. wear or dirt.

More recently, artificial intelligence and machine learning have been incorporated in visual methods for detecting parking slots. Thus, trained neural networks used in deep learning models have been used to detect parking slots of varying characteristics. These methods allow an improved detection of parking slots of different types. Nevertheless, known parking detection methods comprising the use of deep learning exhibit certain drawbacks as well. In particular, images acquired by the cameras typically undergo relatively complex pre-processing steps, e.g. a stitching step. Such pre-processing steps are used to obtain a top-view (or Bird-Eye view). This limits the coverage of the system, i.e. the generated top-view is typically limited to e.g. 3 or 4 meters around the vehicle, which prevents longer range detection and anticipation. Furthermore, such complex pre-processing steps increase computational effort, thus limiting the application of such parking detection systems in standard hardware platforms for vehicles.

As mentioned, parking slot detection is an important aspect in any parking assistance system. Parking assistance systems are known which, either non-visually or visually, are capable of detecting a parking slot in a static manner on a single frame, i.e. on a single capture of the sensor system. Nevertheless, no temporal information is provided by such systems, which limits their real-time usability for certain scenarios and applications in which the vehicle is in motion.

The present disclosure provides examples of parking assistance systems that at least partially overcome some of the drawbacks of existing parking assistance systems. Furthermore, examples of methods of operating a parking assistance system with improved capability are also provided.

SUMMARY

In an aspect of the disclosure, a parking assistance system for a vehicle is provided. The parking assistance system comprises an image acquisition device configured to acquire image data and a parking slot detection module. The parking slot detection module is configured to process the acquired image data to extract one or more 2D (two dimensional) bounding shapes to demarcate corresponding parking slots in the image data. The 2D bounding shapes are formed by a finite number of segments intersecting at corresponding vertices to enclose a closed region. At least one vertex angle is greater than 90°.

According to this aspect of the disclosure, a parking assistance system that is computationally lightweight and that is capable of detecting parking slots around a vehicle in real-time is provided. The parking assistance system comprises an image acquisition device, e.g. a camera, which allows acquiring direct images of the surrounding of the vehicle at different illuminations and/or environmental conditions. Furthermore, the image acquisition device is capable of acquiring images of parking slots independently of their shape and/or orientation. The state of occupancy of the parking slots can also be classified as free or occupied as determined from the acquired image data. The image acquisition device may acquire image data in real-time, thus generating a video feed of the surroundings of the vehicle.

Besides, the system according to the disclosure comprises a parking slot detection module that is configured to detect parking slots by simply processing the image data acquired by an image acquisition device. Thus, no complex pre-processing steps comprising, e.g. combination of image data acquired by multiple image acquisition devices, are required by the system. In other words, the parking assistance system according to the disclosure allows detecting parking slots by using images data acquired by a single image acquisition device as an input. Consequently, computational complexity is minimized and the amount of image data requiring processing is also reduced. The reduced computational complexity enables compatibility of the parking assistance system with commonly used embedded platforms in the automotive industry, which facilitates adoption of the proposed disclosure by the automotive market.

Furthermore, the detection of parking slots in the image data acquired by the image acquisition devices allows for large range of detection. Hence, prior-art systems requiring pre-processing, e.g. to generate a top-view image, are typically constrained to a short range around the vehicle. In this disclosure, by using the image data from the image acquisition device, parking slots located at longer distances can be detected in an effective manner.

In order to demarcate parking slots in the image data, the parking slot detection module is configured to extract one or more 2D bounding shapes. Thus, image data acquired by the image acquisition device may comprise more than one parking slot. By providing the ability to extract one or more 2D bounding shapes, the parking assistant system may achieve anticipation and more efficient operation by enabling detection of multiple parking slots from a single image acquisition.

Furthermore, the parking slot detection module is configured to detect any type of parking slot, including with varied marking designs, wear and tear of markings, or different parking lot layouts, and to carry out the detection and demarcation of parking slots with an improved degree of flexibility. Thus, whereas some existing parking assistance systems may identify parking slots by means of simple rectangular bounding boxes, the parking slot detection module of the current disclosure provides enhanced versatility by enabling the use of 2D bounding shapes of multiple geometries. In particular, 2D bounding shapes may comprise any number of segments and they may comprise either straight or curved segments. In this manner, 2D bounding shapes may not only contain detected parking slots but also delimit them, i.e. the 2D bounding shapes may accurately define the physical limits of detected parking slots.

The use of versatile 2D shapes may not only enable detection of parking slots with multiple shapes and orientations, but it may also account for perspective and/or distortion effects arising from the relative position between the parking slots and the image acquisition device or by the parameters of the image acquisition device employed in the parking assistance system.

Extraction of 2D bounding shapes may be based on a deep learning strategy and corresponding neural networks may be trained with image datasets comprising parking slots of different types and under different perspectives and/or deformations views.

In an example of the disclosure, the parking assistance system may comprise one or more further image acquisition devices to individually acquire image data. The detection module may then be configured to process individually acquired image data to extract one or more 2D bounding shapes to demarcate corresponding parking slots in the individually acquired image data. In this manner, an improved coverage of the surroundings of the vehicle may be obtained. Furthermore, by individually processing the image data from the different image acquisition devices, no complex pre-processing step involving, e.g. combination of image data acquired by different image acquisition devices, may be required. Furthermore, individual detection of parking slots in image data acquired by the different image acquisition devices may also provide increased redundancy and reliability to the parking assistance sytem.

In examples of the disclosure, the parking assistance system may comprise a spatial projection module. The spatial projection module may be configured to generate a 3D projection of the 2D bounding shapes. In particular, the 3D projection may be referred to a 3D coordinate system linked to the vehicle. In order to generate the 3D projection, the spatial projection module may be configured to assume that a vertical component of the vertices of the 3D projection is at a ground level or parallel to a ground level.

In examples of the disclosure, the parking assistance system may comprise a parking slot tracking module. The parking slot tracking module may be configured to track the position and trajectory of the parking slots at different times by tracking the 2D bounding shapes or any data derived from the 2D bounding shapes, such as, but not limited to, the previously mentioned 3D projection.

In another aspect of the disclosure, a method for operating a parking assistance system is provided. The method comprises acquiring image data with an image acquisition device. The method further comprises processing the image data, wherein processing the image data comprises extracting 2D (two dimensional) bounding shapes demarcating parking slots in the image data acquired by the image acquisition device. The extracted 2D bounding shapes are formed by a finite number of segments intersecting at corresponding vertices. At least one vertex angle is greater than 90°.

In an example, at least two vertices of at least one of the extracted 2D bounding shapes may be greater than 90°. In another example, at least a vertex of at least one of the extracted 2D bounding shapes may be smaller than 90°, specifically, two vertices may be smaller than 90°.

According to this aspect of the disclosure, an efficient and reliable method is provided for the detection of parking slots. Furthermore, the method can be implemented in real-time and integrated in standard platforms used by the automotive industry as the computational complexity of the method is relatively low.

In an example of the method, extracting the 2D bounding shapes may comprise using a deep learning algorithm. In particular, a neural network system may be trained to identify parking slots in their entirety, i.e. not only specific low level features, of different shapes under different environmental conditions and under different perspectives or deformation views.

Throughout this disclosure, a 2D bounding shape is understood as a shape that lies in a plane, i.e. the vertices of the 2D bounding shape are arranged in the same geometrical plane. Also throughout this disclosure, the term real-time is understood as meaning that the desired processing of the image data is faster than the frame rate of the image acquisition devices, i.e. the processing takes a shorter time than the time difference between consecutively acquired frames.

BRIEF DESCRIPTION OF THE DRAWINGS

Non-limiting examples of the present disclosure will be described in the following, with reference to the appended drawings, in which:

Figure 1 schematically illustrates an example of different parking slots comprising different shapes and orientations;

Figure 2 schematically illustrates a parking assistance system according to an example;

Figures 3A - 3B schematically illustrate two image data acquired by image acquisition devices with corresponding 2D bounding boxes to demarcate detected parking slots according to an example;

Figures 4A - 4B schematically illustrates a vehicle comprising four image acquisition devices according to an example and corresponding acquired image data according to an example;

Figure 5 schematically illustrates a parking assistance system according to another example;

Figure 6 schematically illustrates the projection of a 2D bounding shape to a 3D representation according to an example;

Figure 7 schematically illustrates a parking assistance according to a further example;

Figure 8 schematically illustrates a portion of a vehicle comprising a parking assistance system comprising two image acquisition devices according to an example;

Figure 9 schematically illustrates a parking assistance system implementation comprising a plurality of processors according to an example;

Figure 10 schematically illustrates a parking assistance system implementation comprising a processor according to an example;

Figure 11 shows a flowchart of an example of a method for operating a parking assistance system according to an example.

DETAILED DESCRIPTION OF EXAMPLES

Reference now will be made in detail to examples of the present disclosure, one or more examples of which are illustrated in the drawings. Each example is provided by way of explanation only, not as a limitation. In fact, it will be apparent to those skilled in the art that various modifications and variations can be made in the present disclosure. For instance, features illustrated or described as part of one example can be used with another example to yield a still further example. Thus, it is intended that the present disclosure covers such modifications and variations as come within the scope of the appended claims and their equivalents.

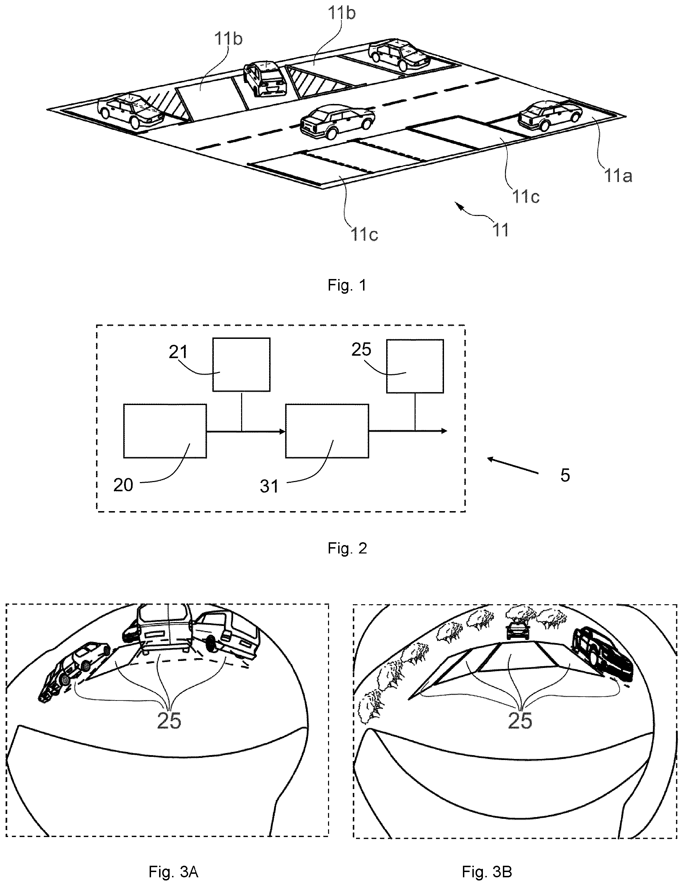

Figure 1 illustrates the large variability in the geometry and marking of parking slots 11. Parking slots 11 may be in the shape of parallel parking slots 11a, diagonal parking slots 11b, or lateral parking slots 11c. Different border types or markings may also be provided, such an x-shape, I-shape or t-shape marking in either continuous or discontinuous form. In some further examples, no such markings may be provided. Furthermore, illumination, e.g. day-light conditions, may also impact the visibility and detection of the parking slots 11. Apart from the characteristics of the parking slots 11 or from the impact of environmental conditions, parking slots 11 may also be classified in accordance with their occupancy. Hence, parking slots 11 may be either occupied, e.g. by another vehicle, or empty, i.e. available for a new vehicle. In order to properly account for said variables, a deep learning methodology may be used as shown in further detail below.

Figure 2 schematically depicts a parking assistance system 5 according to an example of the present disclosure. As shown in Figure 2, the parking assistance system 5 comprises an image acquisition device 20, which is configured to acquire image data 21. Even if only one image acquisition device 20 is presented in Figure 2, it is to be understood that a plurality of said image acquisition devices 20 may be distributed on a vehicle 10. In particular, the image acquisition device 20 may be in the form of a camera, which may be capable of acquiring images of the vehicle surroundings in real-time. The image data 21 may then comprise a video feed or stream of images.

As also shown in Figure 2, the parking assistance sytem 5 comprises a parking slot detection module 31, which is configured to process the acquired image data 21 and to extract one or more 2D bounding shapes 25 to demarcate corresponding parking slots 11 in the image data 21. In an example, the parking slot detection module 31 in Figure 2 may be implemented in a dedicated processor, which may be integrated with the image acquisition device 20. Nevertheless, in other examples, the parking slot detection module 31 may be implemented in a general purpose processor, which may be provided to combine different modules and/or functions of a vehicle 10. In particular, a vehicle ECU (Electronic Control Unit) may be used for the implementation of the parking slot detection module 31.

The parking assistance system 5 depicted in Figure 2 is capable of detecting parking slots 11 in the image data 21 acquired by an image acquisition device 20 independently of the presence of other systems and/or of other image acquisition devices 20. This aspect provides large versatility to the system, which can be implemented with different types of cameras and which avoids the need for complex pre-processing steps, such as stitching, which are commonly required and which add computational complexity and resources.

Parking slots 11 are detected in image data 21 provided by the image acquisition devices 20 without complex pre-processing steps to generate, e.g. a top-view image. Consequently, a highly flexible definition of the bounding elements is employed. In particular, the 2D bounding shapes 25 used to demarcate the corresponding parking slots 11 in the image data 21 are formed by a finite number of segments intersecting at corresponding vertices to enclose closed regions, the closed regions corresponding to the parking slots 11. At least one vertex angle of the 2D bounding shape 25 is greater than 90°.

In that sense, it is worth noting that traditional detectors are based on rectangular bounding boxes or oriented (but still rectangular) bounding boxes. Such rectangular boxes are not suitable for the present disclosure, which uses image data 21 acquired by the image acquisition devices 20 without complex pre-processing. Accordingly, due to different effects such as perspective, e.g. due to the relative position between the image acquisition device 20 and the parking slots 11, or distortion of the image acquisition device 20, a more flexible bounding shape is implemented in the current disclosure which can include, among others, 2D (two dimensional) shapes 25 with curved segments or 2D polygons with different number of sides. In an example of the disclosure, at least one of the extracted 2D bounding shapes 25 may comprise two vertices greater than 90° and a vertex smaller than 90°, specifically the two vertices greater than 90° may be in the range from 92 to 170°.

In an example of the disclosure, the 2D bounding shapes 25 may comprise a polygon, particularly a convex polygon and, more particularly, a convex polygon with four segments intersecting at four corresponding vertices. Thus, as shown in the examples of Figures 3A and 3B, such polygon shapes may be suitable to delimitate the detected parking slots 11. Accordingly, the 2D bounding shapes 25 may, not only contain a detected parking slot 11, but also provide specific boundaries to clearly define the shape, size and orientation of the parking slot 11. Such information may then improve the accuracy of subsequent steps, such as in the case of automatic parking. As also shown in Figures 3A and 3B, the 2D bounding shapes 25 may delimitate both empty and occupied parking slots 11. Thus, as an example, 2D bounding shapes 25 in Figure 3A delimitate three occupied parking slots 11 and one empty parking slot whereas 2D bounding shapes 25 in Figure 3B are used to delimitate 4 empty parking slots 11 and one occupied parking slot 11.

Different types of image acquisition devices 20 may be used in examples of the disclosure. Thus, as also derived from Figure 3, at least one image acquisition device 20 may comprise a fisheye lens, particularly an image acquisition device with a fisheye lens configured to acquire images that encompass a portion of a vehicle 10 and a portion of an exterior of the vehicle 10. The fisheye camera may have an ultra-wide field of view, particularly a field of view greater than 120°, more particularly greater than 160°, and even more particularly, greater than 210°. Usage of fisheye cameras may be advantageous due to their very large field of view. In this manner, the image acquisition devices 20 may cover a bigger area around the vehicle 10 and parking slots 11 may be detected more efficiently. Particularly, parking slots 11 may be detected with increased anticipation, as the image acquisition device 20 may be capable of acquiring parking slots 11 even if located at relatively long distances from the vehicle 10.

Apart from broad coverage of the surroundings of the vehicle 10, the parking assistance system 5 may also process data in real-time. Accordingly, in examples of the disclosure, the image acquisition devices 20 may be configured to acquire real-time images with a frame rate greater than 15 frames per second (fps), particularly greater than 30 frames per second, even more particularly greater than 60 frames per second. The parking assistance system 5 may also be configured to process image data 21 acquired by the image acquisition device 20 with a processing time shorter than the frame rate.

Such acquisition speed, together with the ability to directly process image data 21 with the parking slot detection module 31 may result in very high speeds for the parking assistance system 5 which, in some examples, may infer detections of parking slots 11 in times under 10 milliseconds (ms).

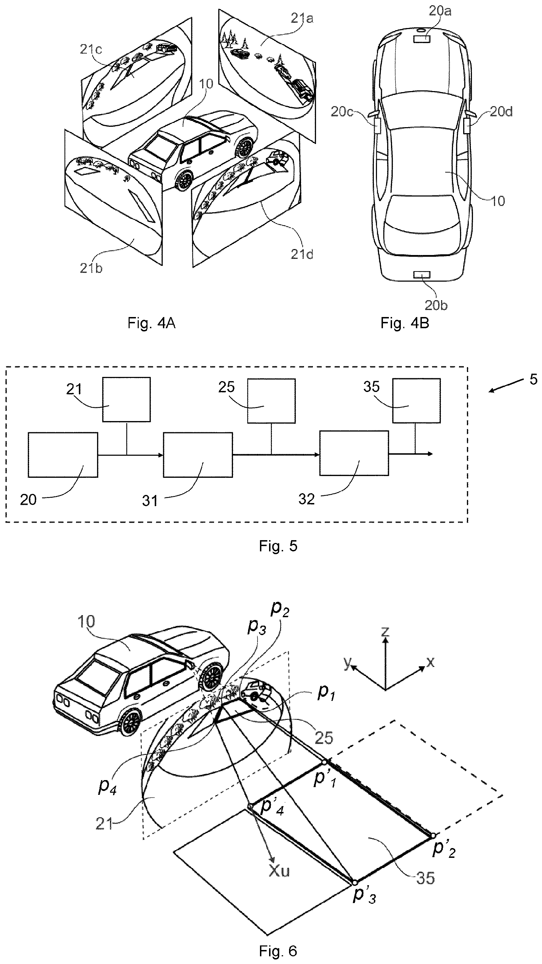

As already mentioned, the use of certain image acquisition devices 20, such as fisheye cameras, may improve the coverage in the surroundings of the vehicle 10. Furthermore, as shown in Figures 4A and 4B, the parking assistance system 5 may comprise a plurality of image acquisition devices 20. Specifically, a field of view of at least one of the image acquisition devices 20 may partially overlap a field of view of another image acquisition device 20. By strategically placing and orienting a plurality of image acquisition devices 20, a setup may be provided capable of offering a 360-degree panoramic view of the surroundings of the vehicle, thus ensuring that no blind spots are left unchecked.

A parking assistance system 5 for a vehicle 10 comprising four image acquisition devices 20 is depicted in Figures 4A and 4B. In particular, the corresponding image acquisition devices 20 may include a frontal image acquisition device 20a arranged at a front position of the vehicle, a rear image acquisition device 20b arranged at a rear position of the vehicle, and two side acquisition devices 20c, 20d arranged at respective sides of the vehicle. Such configuration is schematically depicted in Figure 4B.

Figure 4A shows an example of the four sets of image data 21a-21d that may be obtained from the four image acquisition devices 20a-20d. Specifically when using cameras with a broad field of view, i.e. a 180° field of view or larger, the images provided by the system may be enough to cover the complete surroundings, i.e. the 360° around the vehicle 10.

The parking assistance system 5 presented in Figure 2 is capable of detecting parking slots 11 and to provide, with the parking slot detection module 31, 2D bounding shapes 25 to clearly delimit the parking slots 11 in the two dimensional image data 21 acquired by the image acquisition device 20. Nevertheless, in some applications, a projection of the 2D image into a 3D (three dimensional) representation may be required to properly assist the driver or to properly support an autonomous vehicle in a parking maneuver. Thus, a projection from the 2D image to a 3D common coordinate system may be carried out to facilitate accurate spatial understanding of the surrounding scene.

In that sense, Figure 5 provides another example of a parking assistance system 5. In this example, the parking assistance system 5 may comprise a spatial projection module 32, the spatial projection module 32 being configured to generate a 3D projection 35 of the 2D bounding shapes 25. In particular, the spatial projection module 32 may be configured to generate a 3D projection of the vertices of the 2D bounding shapes 25 into a 3D coordinate system, more particularly into a 3D coordinate system linked to the vehicle 10. In an example, the coordinate system may be disposed with the origin located on a ground level below a midpoint of a rear axle of the vehicle 10. The x-axis of the 3D coordinate system may point forward from the vehicle 10, i.e. in the forward driving direction. The y-axis may point to the left, as viewed when facing forward. Finally, the z-axis may point up from the ground.

In order to carry out the projection from 2D in the image data 21 to 3D, the spatial projection module 32 may assume, in an example, that a vertical component of each of the vertices is at a ground level or parallel to a ground level. In other words, the parking assistance system 5, and the spatial projection module 32 in particular, may assume that the parking slot 11 is at the same level as the bottom of the wheels of the vehicle 10. Such an assumption is indeed valid in most applications as, generally speaking, most parking slots 11 are likely to be located at the same level as the vehicle 10 itself.

Similarly to the example described in relation to Figure 2, the spatial projection module 32 may also be implemented in a dedicated processor or it may be implemented in a processor including other modules and/or functions, such as an ECU of the vehicle 10. Furthermore, although only a single image acquisition device 20 is depicted in Figure 5, a plurality of such devices may be arranged in other examples of the disclosure.

Figure 6 illustrates the mathematical projection of the vertices detected in a 2D bounding shape 25 into the 3D representation. In an example, generating a 3D projection 35 may comprise considering intrinsic parameters of the image acquisition device 20 and/or extrinsic parameters of the image acquisition device 20. On the one hand, intrinsic parameters pertain to the internal characteristics of the image acquisition devices 20, e.g. fisheye cameras, and they may include focal length or distortion coefficients to correct lens distortion. On the other hand, extrinsic parameters may account for the position and orientation of the image acquisition device 20 in the world, which may allow relating image pixels in 2D image data 21 to real-world coordinates. In other words, extrinsic parameters may comprise both translation and rotation information of the image acquisition devices 20 with respect to the vehicle 10. Said parameters may be obtained during a pre-calibration, which may be employed to bridge the gap between the 2D bounding shape 25 and its 3D projection 35.

In most cases, the region of interest for the location of parking slots 11 may be in the area around the vehicle 10. Accordingly, it may be fulfilled in almost all cases of interest that the parking slots 11 in this area may be located in the same vertical plane as the vehicle 10. Therefore, in an example of the disclosure, the 2D to 3D projection may assume that the detected parking slots 11 are located in the ground plane, i.e. z=0. Based on this assumption, and given a 2D point with $p$ coordinates in the 2D image (see Figure 6), the $p'$ coordinates in the 3D space may be computed as explained in the following.

In first place, given the ground plane in 3D coordinates with norm vector N=(0,0,1), this plane may be transformed to the coordinate system of the image acquisition device 20 by:

$$N' = P^{-1} \cdot N$$

where $N'$ is the ground plane in the 2D coordinate system of the image acquisition device 20 and $P = [R|t]$ corresponds to the projection matrix accounting for extrinsic parameters. Hence, $R$ and $t$ are vectors that account for the rotation ($R$) of the image acquisition device 20 in the three axes and the translation ($t$) of the image acquisition device 20.

Subsequently, the ray ($X_d$) in 3D space that passes through the corresponding 2D point in the image plane acquired by the image acquisition device 20 may be computed as follows:

$$X_d = K^{-1} \cdot \begin{bmatrix} x \\ y \\ 1 \end{bmatrix}$$

where $K^{-1}$ corresponds to the inverse of the image acquisition device 20 intrinsic matrix and $x$, $y$ is the 2D point in the 2D plane, i.e. $p=[x,y]$.

Given the ray in 3D space ($X_d$), the image acquisition device 20 distortion coefficient may be used to undistort the ray so as to obtain the undistorted ray; $X_u$.

The 3D projection $p'_c$, in image acquisition device 20 coordinates, of the 2D point may be defined by:

$$p'_c = X_u \cap N'$$

where n corresponds to the intersection between ray $X_u$ and plane N'.

Finally, the resulting 3D point, $p'_c$, in image acquisition device 20 coordinates, may be transformed into the 3D coordinate system:

$$p' = P \cdot p'_c$$

The 3D projection 35 may allow determining the dimensions, i.e. length and width, of a parking slot 11 detected in the image data 21 acquired by a single image acquisition device 20. In this manner, no further image acquisition devices 20 or alternative sensors may be required to this end.

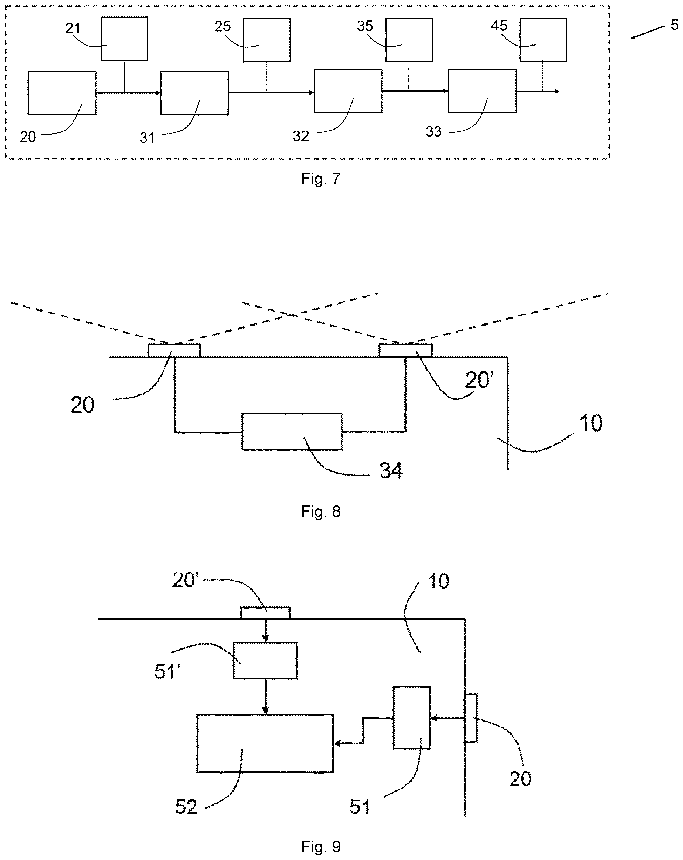

In still further examples of the disclosure, a parking assistance system 5 may be provided comprising a parking slot tracking functionality. Tracking may comprise providing an identifier over time to each parking slot detected around the vehicle 10. In an example, the parking assistance system 5 may comprise a parking slot tracking module 33. The parking slot tracking module 33 may be configured to track the position and trajectory of the parking slots 11 by tracking the 2D bounding shapes 25 or an object derived from the 2D bounding shapes 25, specifically by tracking 3D projections 35 of the 2D bounding shapes 25. The tracking may comprise assigning a unique identifier to a 2D bounding shape 25, or to an object derived from the 2D bounding shape 25, for a parking slot 11 detected at a certain time (the tracked parking slot 11) and assigning the same identifier to a 2D bounding shape 25, or to an object derived from a 2D bounding shape 25, for a parking slot 11 detected at a later time when the two 2D bounding shapes 25, or the two objects derived from the 2D bounding shapes 25, are associated to the same parking slot 11. As mentioned, tracking may comprise using any objects or data derived from the 2D bounding shapes 25, such as the 3D projections 35 as shown below in the example described with reference to Figure 7. Specifically, in examples of the disclosure, the tracking may be based on the detected vertices of the 2D bounding shape 25 or one any data derived from the vertices, such as an intermediate position or a 3D projection of the vertices.

Tracking of detected parking slots 11 may be particularly relevant in certain applications of the parking assistance system 5. In particular, tracking may be used to provide temporal information which may be relevant in applications comprising vehicle in motion. This may be the case, for instance, when using the system for "autoparking" maneuvers in autonomous vehicles. In such cases, tracking of the detected parking slots 11, before and during the parking maneuver, may provide a more accurate, robust and efficient maneuver.

Figure 7 provides an example of a parking assistance system 5 comprising a parking slot tracking module 33. In this examples, the parking slot tracking module 33 may be configured to track the position and trajectory of the parking slots 11 by tracking the 3D projections 35 of the 2D bounding shapes 25. The tracking may comprise assigning a unique identifier 45 to a 3D projection 35 corresponding to a 2D bounding shape of a parking slot 11 detected at a certain time (the tracked parking slot 11), and assigning the same identifier 45 to a 3D projection 35 for a parking slot 11 detected at a later time when the two 3D projections 35 are associated to the same parking slot 11.

In other examples, the parking slot tracking module 33 may be configured to track parking slots 11 by using the 2D bounding shapes 25 and/or any other data derived from the 2D bonding shapes 25. In other words, apart from the 3D projection 35, other data derivable from the 2D bounding shapes 25 may also be employed in other examples.

The tracking functionality may be particularly relevant to assign parking slots 11 detected at different times with the same real world parking slot 11. Thus, without such tracking functionality, the parking assistance system 5 may not be able to identify that a parking slot 11 detected in a certain frame is actually the same as a parking slot 11 already detected in a previous frame. Furthermore, parking slot tracking may also be useful to account for the presence of obstacles and/or to provide more robustness to the system. Thus, parking slot tracking may allow the parking assistance system 5 to cope with scenarios wherein a parking slot 11 is detected at a certain first time frame, not detected at a subsequent second time frame, but then detected again in a third time frame. By providing parking slot 11 tracking, the parking assistance system 5 may be able to provide the first identifier 45 to the parking slot 11 detected in the first and third time frames, thus smoothening the process.

In order to track the parking slots 11, an example of the parking slot tracking module 33 may comprise a prediction and an association step. In particular, the parking slot tracking module 33 may be configured to predict, specifically using a Kalman filter, state vectors of detected, i.e. tracked, parking slots 11. The prediction may be based on previous state vectors and on a dynamic model. More particularly, the state vector may include the position and/or the velocity components of the vertices of the 3D projection 35. In some other variants, only one of the vertices may be used for the tracking or a point other than a vertex of the 3D projection 35 may be selected to carry out the tracking with the parking slot tracking module 33. In other examples, the 2D bounding shapes 25, e.g. the vertices of the 2D bounding shapes25, or any other object derived from the 2D bounding shapes 25 may be used for the prediction.

The use of a Kalman filter for the prediction may increase the effectiveness in achieving accurate and computationally efficient tracking. The Kalman filter algorithm may utilize the state vectors to continuously enhance predictions by incorporating new measurements, thereby providing robust and precise tracking of parking slots 11.

Following the previously described prediction, the parking slot tracking module 33 may comprise an association step. In this step, the parking slot tracking module 33 may associate detected parking slots 11 with the tracked parking slots 11. The associating may comprise computing a likelihood matrix that assigns a likelihood value to each pair of detected parking slot and predicted parking slot. Specifically, assigning the likelihood value may be based on the intersection over union, IoU, of the predicted and the detected 3D projections 35.

In further examples, the prediction and association steps may be carried out for the 2D bounding shapes 25 and not for the 3D projections 35. Furthermore, in other variants of the disclosure, the prediction and association may be based on other objects derived from the 2D bounding shapes 25 other than the already mentioned 3D projections,

The correct association of the tracked with the detected parking slots 11 may ensure robustness to real-world noisy environments and it may provide consistency over time, thus enhancing the overall accuracy of the parking assistance system 5.

Other than the intersection over union, IoU, other parameters, such as the identification of the image acquisition device 20, the state of occupancy of the parking slot 11, or centroid distances between the detected and the tracked parking slots 11 may be employed to calculate the likelihood value for the different pairs. Furthermore, in examples of the disclosure, a maximization unbalanced assignment problem may be construed to associate detections with tracked objects. The likelihood matrix described above may be the corresponding cost matrix for the assignment problem. In order to solve the assignment problem, a Hungarian algorithm may be used to provide low complexity and speed.

In examples of the disclosure comprising parking slot tracking, a liveness assessment functionality may also be provided. Thus, in order to minimize the effect that false positives and false negatives may have on the parking assistance system 5, as well as to manage memory resources, a liveness assessment process may be provided to handle the initialization and the termination of tracked parking slots 11, i.e. to determine when and for how long a parking slot 11 is to be tracked. In particular, for the initialization process, when certain parking slot 11 detections are not associated with an already tracked parking slot 11 for several image acquisitions or frames, these detected parking slots 11 may become newly tracked parking slots and they may be included in the system as real parking slots 11. Consequently, a new identifier may be given to such parking slots 11 .

On the other hand, the termination process for already tracked parking slots 11 may comprise that, instead of removing a tracked parking slot 11 from the list of tracked parking slots 11 as soon as this is not associated with a detected parking slot 11 in a frame, it may be kept on the background. Then, once the tracked parking slot 11 has not been associated to a detection for several image acquisitions or frames, the tracked parking slot 11 may be considered as lost or out of view of the vehicle 10. Consequently, such parking slot 11 may then be removed from the list of tracked parking slots 11.

A parking assistance system 5 comprising at least two image acquisition devices 20, 20' may be provided. In particular, as shown in Figure 8, two image acquisition devices 20, 20' may be arranged on a vehicle 10. As a result of the surround view system configuration, some angles of the scene may be viewed by the two image acquisition devices 20, 20'. In consequence, parking slots 11 located in the overlapping area may be tracked by the two image acquisition devices 20, 20' simultaneously. In order to account for this situation, the system may comprise a fusion module 34 configured to assign a single identifier to parking slots 11 detected and tracked by different image acquisition devices 20, 20' when a mean overlapping area of the corresponding 2D bounding shapes 25 and/or the corresponding 3D projections 35 exceed a predefined value for a predetermined period of time. In this manner, the parking assistance system 5 may offer robustness to misdetections and/or occlusions.

Apart from detecting and tracking parking slots 11, the parking assistance system 5 may also be configured, in some examples, to provide visual support to a driver. Thus, in some cases, a user interface unit or a display may be provided in the vehicle 10. In particular, a parking assistance system 5 may comprise a plurality of image acquisition devices 20, particularly four image acquisition devices 20. The system may also comprise a top-view module configured to generate a top-view image of the vehicle 10 and its surroundings based on image data acquired by the plurality of image acquisition devices 20. Said top-view image may be obtained by carrying out stitching of the acquired image data 21. It is important to note that, in the present disclosure, said top-view image may be generated for information purposes and to provide support to the driver. Nevertheless, as already explained, the provision of such top-view image is not needed for the detection of the parking slots 11 themselves which is based on the image data 21 acquired by the individual image acquisition devices 20 with no complex pre-processing step required.

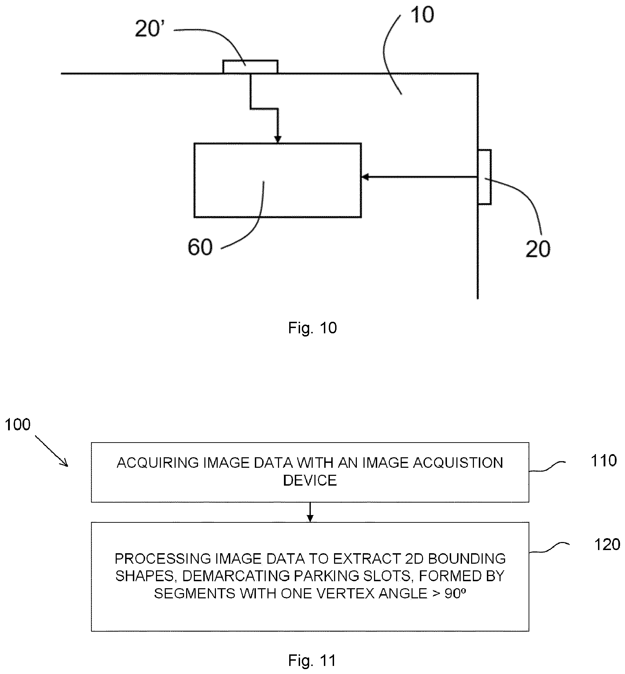

Regarding the physical implementation, the parking assistance sytem 5 may comprise one or more processors for implementing the parking slot detection module 31, the spatial projection module 32, the parking slot tracking module 33 and/or the fusion module 34. Thus, it is noted that such modules are understood as logical or functional modules but not as separate individual hardware components. In particular, said functional modules may be implemented in a variety of manner including, e.g. in a distributed or centralized manner, as explained, for instance, in reference to Figures 9 and 10.

In some examples, a parking assistance system 5 may comprise a plurality of image acquisition devices and a plurality of processors, each processor being configured to implement the functionality of the parking slot detection module 31, the spatial projection module 32 and/or the parking slot tracking module 33 of a corresponding image acquisition device 20.

Thus, in the example shown in Figure 9, two image acquisition devices 20, 20', arranged in a vehicle 10 are schematically presented. In this example, individual processors 51, 51' may be operationally coupled to each of the image acquisition devices 20, 20'. In particular, said processors 51, 51' may be configured to implement the functionality of the parking slot detection module 31, the spatial projection module 32 and the parking slot tracking module 33 for image data acquired by each of the image acquisition devices 20, 20'. Processors 51, 51' may be physically arranged together, e.g. integrated, or in close proximity to the corresponding image acquisition devices 20, 20'. A further processor 52 may be provided to implement other functions such as a fusion module 34 or a module to generate a top-view. Furthermore, processor 52 may incorporate the required algorithms to, e.g. perform a parking maneuver. In some cases, processor 52 may comprises a vehicle ECU, which may also implement other function. By splitting the different functionalities into different processors, increased versatility may be provided.

A further variant is schematically depicted in Figure 10. In this example, a single processor 60 may be provided. Thus, in this case, the parking assistance system 5 may also comprise a plurality, e.g. two, image acquisition devices 20, 20', which may be installed on a vehicle 10. The parking assistance system 5 may also comprise a single processor 60, which may be configured to implement the parking slot detection module 31, the spatial projection module 32 and/or the parking slot tracking module 33 of the parking assistance system 5. In other words, the single processor 60 may be configured to implement the functionalities of the parking slot detection module 31, the spatial projection module 32 and/or the parking slot tracking module 33 for the image data acquired by all the image acquisition devices 20 in the parking assistance sytem 5. In an example, the single processor 60 may be implemented in a vehicle ECI, which may implement other functions of the vehicle 10. In this manner, a more compact and potentially more cost effective system may be provided.

As understood by the skilled person, any other combinations may be implemented in further examples of the disclosure comprising a plurality of image acquisition devices. Thus, the distribution of the different modules among different processors may be carried out in different manners. Furthermore, in some examples, increased robustness may be provided to the parking assistance system 5 by enabling some redundancy between the different processors. Indeed, in examples comprising multiple processors, multiple processors may be configured to carry out the same functionalities.

In examples of the disclosure, the detection of the parking slots may be based on a deep learning architecture. Thus, the algorithm to extract the 2D bounding shapes 25 may be based on deep leaning, particularly it may be based on a deep learning strategy trained to identify parking slots 11 in their entirety. In other words, the neural networks may not be trained to identify specific features, e.g. lines, markers, of parking slots 11 but they may be trained to identify images of complete parking slots, thus increasing the efficiency of the system.

Parking slots 11 may exhibit a very wide range of shapes and orientations. Accordingly, in order to train the neural network, a large dataset of parking images, acquired in different parking environments, including different parking shapes (lateral, parallel, and diagonal), different border types (x-shape, I-shape, t-shape), and different day-light or weather conditions, may be provided. Besides, images including both occupied and empty parking slots 11 may also be included so that the parking assistance system 5 may also be capable of considering occupancy state of the parking slots 11. Annotated datasets comprising a volume of images of at least 100K, preferably at least 200K, may be utilized. Of those images, a certain percentage, e.g. 70%, may be used for the training of the neural networks in the deep learning system whereas the remaining 30% may be used for test purposes-

Furthermore, in the proposed disclosure, 2D bounding shapes 25 of different geometries (e.g. different number of sides or different angles at the vertices between sides) can be directly determined from image data 21 acquired by the image acquisition devices 20. No additional complex pre-processing step is needed. Consequently, the image dataset may correspond to the images directly acquired by the image acquisition devices 20. Images of the parking slots 11 in the acquired images may be affected by perspective and/or distortion effects. Consequently, datasets comprising images of parking slots 11 in perspective and/or distorted may be used. In particular, in case of using fisheye cameras, datasets comprising images acquired with such fisheye cameras may be generated and/or obtained in order to train the neural networks in the deep learning system.

In examples of the disclosure, the parking assistance system 5 may be configured to account for the size of the vehicle 10. Thus, the parking assistance system 5 may be configured to compare a predefined size of the vehicle 10 with the dimensions of the detected parking slot 11. Specifically, both the length and the width of the detected parking slots 11 may be considered. The dimensions of the parking slot 11 may be determined from the image data 21 acquired by a single image acquisition device 20, more particularly, based on the 3D projection 35 of the corresponding 2D bounding shape 25. More specifically, the distance between the doors of the vehicle 10 and the corresponding limits of the detected parking slot 11 may be determined by the parking assistance sytem 5 to decide whether the vehicle 10 fits in the detected parking slot 11. In order to take the size of the vehicle 10 into account, the 3D projection 35 of the 2D bounding shapes 25 may be employed, the 3D projection 35 being linked to a certain coordinate system referred to the vehicle 10.

Figure 11 shows a flowchart of an example of a method 100 for operating a parking assistance system 5 for a vehicle 10. The method comprises, at block 110, acquiring image data 21 with an image acquisition device 20. Block 120 comprises processing the image data 21 acquired with the image acquisition device 20. The processing of the image data 21 comprises extracting 2D bounding shapes 25 demarcating parking slots 11 in the image data 21 acquired by the image acquisition device 20. The 2D bounding shapes 25 are formed by a finite number of segments intersecting at corresponding vertices to enclose a close region, wherein at least a vertex angle is greater than 90°. In an example of the disclosure, acquiring image data 21 in block 110 may comprise acquiring image data 21 in real-time.

In order to extract 2D bounding shapes of non-rectangular geometry, adapted versions of existing algorithms (such as those based on the Yolo algorithm for real-time object detection) may be employed. Such known systems are neural-network based models that utilize deep learning for object detection Such known systems are typically limited to rectangular bounding boxes. Thus, in some implementations, they are configured to determine the position of two diagonally opposed vertices of a rectangle, from which the complete rectangular box can be fully determined. Alternatively, known systems may also use a center position for a rectangular box together with a corresponding height and width.

In examples of the present disclosure, in order to extract non-rectangular 2D bounding shapes, the position of all the vertices of a 2D bounding shape, which may also comprise a variable number of sides, may be determined. In this manner, a flexible detection algorithm may be obtained which may be capable of detecting parking slots 11 in image data 21 acquired with image acquisition devices 20 even when these are shown in perspective and/or in a distorted or deformed manner. Particularly, in an example, the algorithm may be adapted to extract bounding convex polygons with vertex angles different than 90° and with different number of sides adjusted to specific scenarios by properly detecting the vertices of the convex polygons. In a particular example, a four sided convex polygon with a vertex angle greater than 90°, i.e. a non-rectangular four-side polygon, may be defined by detecting the position of all four vertices.

In an equivalent manner to the different examples provided for the parking assistance system 5, different variants and/or examples may also be provided for the method 100. Thus, in some examples, a method may be provided comprising, not only the detection of the parking slots 11, but also the spatial projection of the bounding shapes 25 for the detected parking slots from a 2D representation in the acquired image data 21 to a 3D representation. In order to obtain the 3D projections 35, the method according to this variant may take both intrinsic and extrinsic parameters of the image acquisition devices 20 into account.

Furthermore, in other examples, a method may be provided comprising also the tracking of the detected parking slots 11. Said tracking may comprise prediction and association steps. Thus, a Kalman filter may be incorporated in a method to predict the position and the trajectory of a detected parking slot 11. In particular, the position and trajectory of the vertices of a 3D projection 35 of a 2D bounding shape 25 for the corresponding parking slot 11 may be predicted. Then, predictions may be associated with detections, i.e. the method may allow determining which detections from the image acquisition device 20 correspond to which tracked parking slots 11. In other examples of the method according to the present disclosure, the tracking of the parking slots 11 may be based on prediction and associations steps carried out on the 2D bounding shapes 25 or on variables, other than the 3D projections 35, also derived from the 2D bounding shapes 25.

An example method may also comprise fusing image data 21 acquired by multiple image acquisition devices 20. This fusing may be particularly useful in systems comprising multiple image acquisition devices 20 with overlapping fields of view. Thus, by properly fusing the image data 21, parking slots 11 detected and tracked by different image acquisition devices 20 may be assigned the same identifier if corresponding to the same real parking slot 11.

Moreover, in some other variants of the method, a top-view image of the vehicle 10 and its surroundings, including the parking slots 11, may be generated. Although not needed for the detection and tracking of parking slots 11, this method may provide additional information to the driver, especially during parking maneuvers.

Different approaches may be used to implement the method 100 and the above mentioned variants. In particular, a method may be provided wherein extracting the 2D bounding shapes 25 may comprise using an artificial intelligence algorithm, specifically a machine learning algorithm, more specifically a deep learning algorithm, and even more specifically a deep learning algorithm trained to identify parking slots 11 in their entirety. According to this example, the method may comprise an initial training phase, in which a dataset containing a large number of annotated images may be used to train a neural network sytem. The images used for the training phase may comprise large sets of parking slot images in perspective, i.e. with "deformed", non-rectangular, images of the parking slots 11. Indeed, the present disclosure is intended to detect parking slots 11 in image data 21 obtained with image acquisition devices 20 without the need of any complex pre-processing step. Due to perspective and/or distortion effects, the parking slots 11 shown in such image data 21 may not typically comprise a rectangular shape. Accordingly, datasets comprising images of parking slots 11 in perspective may be generated. To this end, images providing a comprehensive view of parking slots 11 comprising large variability of parking lot type, orientation and corner shapes may be directly acquired and annotated under different perspectives and different scenarios. Furthermore, simulation software may be used to enrich the dataset with various environmental scenarios, including different daylight levels or different weather conditions.

Afterwards, an algorithm implementing the method, including the different modules described above in relation to the different variants, may be loaded in a processor and, optionally, embedded in an ECU (Electronic Control Unit) of the vehicle 10.

This written description uses examples to disclose the teaching, and also to enable any person skilled in the art to practice the teaching, including making and using any devices or systems and performing any incorporated methods. The patentable scope is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims. Aspects from the various examples described, as well as other known equivalents for each such aspects, can be mixed and matched by one of ordinary skill in the art to construct additional examples and techniques in accordance with principles of this application. If reference signs related to drawings are placed in parentheses in a claim, they are solely for attempting to increase the intelligibility of the claim, and shall not be construed as limiting the scope of the claim.

**Claims**

1. A parking assistance system for a vehicle, the system comprising:

   an image acquisition device configured to acquire image data; and
   a parking slot detection module configured to process the image data to extract one or more 2D bounding shapes to demarcate corresponding parking slots in the image data,

   the 2D bounding shapes being formed by a finite number of segments intersecting at corresponding vertices to enclose a closed region,
   and wherein at least one vertex angle is greater than 90°.

2. The parking assistance system of claim 1, comprising one or more further image acquisition devices configured to individually acquire image data;
   the parking slot detection module being further configured to process the individually acquired image data to extract one or more 2D bounding shapes to demarcate corresponding parking slots in the individually acquired image data.

3. The parking assistance system of any of claims 1 or 2, wherein the 2D bounding shapes comprise a polygon, particularly a convex polygon and, more particularly, a convex polygon with four segments intersecting at four corresponding vertices.

4. The parking assistance system of any previous claim, wherein at least one image acquisition device comprises a fisheye lens, particularly a fisheye lens configured to acquire images that encompass a portion of the vehicle and a portion of an exterior of the vehicle, the image acquisition device having an ultra-wide field of view, particularly a field of view greater than 120°, more particularly greater than 160°, and even more particularly, greater than 210°.

5. The parking assistance system of any previous claim, comprising a spatial projection module, the spatial projection module being configured to generate a 3D projection of the 2D bounding shapes, particularly to generate a 3D projection of the vertices of the 2D bounding shapes into a 3D coordinate system, more particularly into a 3D coordinate system linked to the vehicle, even more particularly, into a coordinate system with the origin located on a ground level below a midpoint of a rear axle of the vehicle.

6. The parking assistance system of claim 5, wherein generating the 3D projection comprises assuming that a vertical component of each of the vertices is at a ground level or parallel to a ground level.

7. The parking assistance system of any of claims 5 or 6, wherein generating a 3D projection comprises considering intrinsic parameters of the image acquisition devices and/or extrinsic parameters of the image acquisition devices.

8. The parking assistance system of any previous claim, comprising a parking slot tracking module, the parking slot tracking module being configured to track the position and trajectory of the parking slots by tracking the 2D bounding shapes or by tracking an object derived from the 2D bounding shapes, specifically a 3D projection of the 2D bounding shapes, the tracking comprising assigning a unique identifier to a 2D bounding shape, or to an object derived from a 2D bounding shape, of a parking slot detected at a certain time, and assigning the same identifier to a 2D bounding shape, or to an object derived from a 2D bounding shape, of a parking slot detected at a later time when the two 2D bounding shapes, or the two objects derived from a 2D bounding shapes, are associated to the same parking slot.

9. The parking assistance system of claim 8, wherein the parking slot tracking module is configured to:

predict, specifically using a Kalman filter, state vectors of tracked parking slots based on previous state vectors and on a dynamic model, the state vectors including the position and/or the velocity components of the vertices of the 2D bounding shapes or of an object derived from the 2D bounding shapes, specifically of 3D projections of the 2D bounding shapes, and to associate detected parking slots with tracked parking slots, the associating comprising computing a likelihood matrix that assigns a likelihood value to each pair of detected parking slot and predicted tracked parking slot, specifically wherein assigning the likelihood value is based on the intersection over union, IoU, of the predicted and the detected 2D bounding shapes or of the predicted and detected objects derived from the 2D bounding shapes, specifically of the predicted and detected 3D projections of the 2D bounding shapes.

10. The parking assistance system of claims 8 or 9, wherein the system comprises at least two image acquisition devices , the system further comprising a fusion module configured to assign a single identifier to parking slots detected and tracked by different image acquisition devices when a mean overlapping area of the corresponding 2D bounding shapes or of the corresponding objects derived from the 2D bounding shapes, specifically of the 3D projections of the 2D bounding shapes, exceeds a predefined value for a predetermined period of time.

11. The parking assistance system of any previous claim comprising a plurality of image acquisition devices, particularly four image acquisition devices, the system further comprising a top-view module configured to generate a top-view image of the vehicle and its surrounding based on image data acquired by the plurality of image acquisition devices, particularly by carrying out stitching of the acquired image data.

12. The parking assistance system of any of previous claim, comprising a plurality of image acquisition devices, specifically wherein a field of view of at least one of the image acquisition devices partially overlaps a field of view of another image acquisition device, more specifically wherein the plurality of image acquisition devices comprise a frontal image acquisition device arranged at a front position of the vehicle, a rear image acquisition device arranged at a rear position of the vehicle, and two side acquisition devices arranged at respective sides of the vehicle.

13. The parking assistance system of any previous claim comprising one or more processors for implementing the parking detection module, the spatial projection module, the parking slot tracking module and/or the fusion module, specifically wherein

the parking assistance system comprises a plurality of image acquisition devices and a plurality of processors, each processor being configured to implement the functionality of the parking detection module, the spatial projection module and/or the parking slot tracking module to process image data of a corresponding image acquisition device, or
the parking assistance system comprises a plurality of image acquisition devices and a single processor configured to implement the parking detection module, the spatial projection module and/or the parking slot tracking module of the parking assistance sytem.

14. A method for operating a parking assistance system for a vehicle, the method comprising:

acquiring image data with an image acquisition device,
processing the image data acquired with the image acquisition device, wherein processing the image data comprises
extracting 2D bounding shapes demarcating parking slots in the image data acquired by the image acquisition device, the 2D bounding shapes being formed by a finite number of segments intersecting at corresponding vertices to enclose a close region, wherein at least a vertex angle is greater than 90°.

15. The method of claim 14 wherein extracting the 2D bounding shapes comprises using an artificial intelligence algorithm, specifically a machine learning algorithm, more specifically a deep learning algorithm, and even more specifically a deep learning algorithm trained to identify parking slots in their entirety.

Fig. 1

Fig. 2

Fig. 3A

Fig. 3B

Fig. 4A

Fig. 4B

Fig. 5

Fig. 6

Fig. 7

Fig. 8

Fig. 9

20'

10

60

20

Fig. 10

100

ACQUIRING IMAGE DATA WITH AN IMAGE ACQUISTION DEVICE

110

PROCESSING IMAGE DATA TO EXTRACT 2D BOUNDING SHAPES, DEMARCATING PARKING SLOTS, FORMED BY SEGMENTS WITH ONE VERTEX ANGLE > 90°

120

Fig. 11

Europäisches
Patentamt
European
Patent Office
Office européen
des brevets

**EUROPEAN SEARCH REPORT**

Application Number

EP 24 38 2198

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2024/029448 A1 (LI HAIPENG [CN] ET AL) 25 January 2024 (2024-01-25) * paragraph [0035] - paragraph [0061] * * paragraph [0076] - paragraph [0090] * * figure 3 * | 1-4,8-15 | INV. G06V10/46 G06V20/58 |
| X | DE 10 2021 107914 A1 (FORD GLOBAL TECH LLC [US]) 30 September 2021 (2021-09-30) * paragraphs [0029], [0039], [0042], [0046], [0048] * * paragraph [0050] - paragraph [0051] * * paragraph [0062] - paragraph [0063] * * figure 2 * | 1-3,8, 13-15 | |
| X | US 2020/294310 A1 (LEE DONGWOO [KR] ET AL) 17 September 2020 (2020-09-17) * paragraphs [0027], [0029], [0030] * * paragraph [0033] - paragraph [0045] * * paragraphs [0049], [0052] - paragraph [0054] * * paragraph [0108] * * figure 5A * | 1-8, 13-15 | |
| X | WANG LIHAO ET AL: "Holistic Parking Slot Detection with Polygon-Shaped Representations", 2023 IEEE/RSJ INTERNATIONAL CONFERENCE ON INTELLIGENT ROBOTS AND SYSTEMS (IROS), IEEE, 1 October 2023 (2023-10-01), pages 5797-5803, XP034489414, DOI: 10.1109/IROS55552.2023.10342486 [retrieved on 2023-12-13] * abstract * * page 5799 - page 5801 * * figure 4 * | 1-8, 11-15 | TECHNICAL FIELDS SEARCHED (IPC) G06V B62D G08G G06T |

The present search report has been drawn up for all claims

| Place of search | Date of completion of the search | Examiner |
|---|---|---|
| The Hague | 10 July 2024 | Wunderlich, Doreen |

EPO FORM 1503 03.82 (P04C01)

## ANNEX TO THE EUROPEAN SEARCH REPORT
## ON EUROPEAN PATENT APPLICATION NO.

EP 24 38 2198

This annex lists the patent family members relating to the patent documents cited in the above-mentioned European search report.
The members are as contained in the European Patent Office EDP file on
The European Patent Office is in no way liable for these particulars which are merely given for the purpose of information.

10-07-2024

| Patent document cited in search report | Publication date | Patent family member(s) | Publication date |
|---|---|---|---|
| US 2024029448 A1 | 25-01-2024 | CN 115063781 A | 16-09-2022 |
| | | US 2024029448 A1 | 25-01-2024 |
| DE 102021107914 A1 | 30-09-2021 | CN 113525349 A | 22-10-2021 |
| | | DE 102021107914 A1 | 30-09-2021 |
| | | US 2021304602 A1 | 30-09-2021 |
| US 2020294310 A1 | 17-09-2020 | CN 113632095 A | 09-11-2021 |
| | | DE 112020000369 T5 | 21-10-2021 |
| | | JP 7399164 B2 | 15-12-2023 |
| | | JP 2022523614 A | 26-04-2022 |
| | | US 2020294310 A1 | 17-09-2020 |
| | | US 2022092855 A1 | 24-03-2022 |
| | | US 2024169549 A1 | 23-05-2024 |
| | | WO 2020190880 A1 | 24-09-2020 |

EPO FORM P0459

For more details about this annex : see Official Journal of the European Patent Office, No. 12/82